# EUROPÄISCHE PATENTSCHRIFT

(11) **EP 1 056 812 B1**
(45) Veröffentlichungstag und Bekanntmachung des Hinweises auf die Patenterteilung: **01.12.2004**
(21) Anmeldenummer: 99911608.0
(22) Anmeldetag: 20.02.1999
(51) Int. Cl.: C09D 5/08

(54) **KORROSIONSSCHUTZPIGMENT UND DESSEN VERWENDUNG**
CORROSION-PROTECTIVE PIGMENT AND USE THEREOF
PIGMENT ANTICORROSION ET SON UTILISATION

(30) Priorität: 26.02.1998 DE 19807808
(43) Veröffentlichungstag der Anmeldung: 06.12.2000
(73) Patentinhaber: Chemische Fabrik Budenheim KG, 55257 Budenheim (DE)
(72) Erfinder: BITTNER, Annegret, D-65187 Wiesbaden (DE); FISCHER, Erhard, D-55218 Ingelheim (DE); NÄGERL, Hans-Dieter, D-67373 Dudenhofen (DE); WISSEMBORSKI, Rüdiger, D-55218 Ingelheim (DE)
(74) Vertreter: Weber, Dieter, Dr.
(86) Internationale Anmeldenummer: PCT/DE1999/000466
(87) Internationale Veröffentlichungsnummer: WO 1999/043757

(56) Entgegenhaltungen:
- EP-A- 0 718 377
- WO-A-92/01023
- DATABASE WPI Section Ch, Week 9531 Derwent Publications Ltd., London, GB; Class A82, AN 95-237301 XP002109626 & JP 07 145340 A (TAYCA CORP), 6. Juni 1995 (1995-06-06)
- DATABASE WPI Section Ch, Week 9314 Derwent Publications Ltd., London, GB; Class E33, AN 93-111772 XP002109627 & JP 05 043212 A (NIPPON CHEM IND CO LTD), 23. Februar 1993 (1993-02-23)
- PATENT ABSTRACTS OF JAPAN vol. 097, no. 005, 30. Mai 1997 (1997-05-30) & JP 09 012931 A (TEIKA CORP), 14. Januar 1997 (1997-01-14)

## Beschreibung

Die Erfindung betrifft Korrosionsschutzpigmente zum Oberflächenschutz von Metallen oder Metallegierungen, insbesondere für den Korrosionsschutz lackierter Metall- oder Metallegierungsteile.

Es ist bekannt, Anstrichmitteln, wie Grundbeschichtungen lackierter Metallteile, die zum Schutz von Metallen gegen die atmosphärische Korrosion verwendet werden, Korrosionsschutzpigmente zuzusetzen. Als korrosionsinhibierende Pigmente wurden früher vor allem toxische Pigmente auf der Basis von Blei- oder Schwermetallverbindungen bzw. Chromate verwendet. Aufgrund der zunehmenden Bemühungen für den Umweltschutz wurde jedoch der Einsatz solcher toxischer Pigmente stark eingeschränkt. Beispielsweise in "Journal of Coatings Technology" 58, 1986, Seiten 59 bis 65 wird darauf hingewiesen, daß das toxische Zinkchromat durch Zinkphosphat ersetzt werden kann. In diesem Bericht wird auch ausgeführt, daß mit basischem Zink-Molybdänphosphat bzw. Zink-Aluminiumphosphat gute Ergebnisse erzielt wurden.

Die Verwendung schwermetallhaltiger Korrosionsschutzpigmente in Beschichtungsstoffen wird jedoch laufend weiter eingeschränkt. Die deutsche MAK-Wert-Komission hat für Zinkphosphat eine Überprüfung des MAK-Wertes im Jahr 1998 vorgeschlagen. In den USA werden in der EPA-Vorschrift EPCRA (Emergency Planning and Community Right-To-Know, Section 313) Zinkverbindungen in Staubform als toxisch eingestuft. In der Abfallbeseitigung von schwermetallhaltigen Beschichtungsstoffen oder Beschichtungen (Strahlgutabfall) sind für Schwermetalle. Grenzwerte vorgeschrieben, die nicht überschritten werden dürfen. Auch ist der Schwermetallgehalt des Abwassers aus den Produktionsstätten der Lackhersteller oder bei der Verarbeitung, wie in Spritzkabinen, anfallenden Abwassers limitiert, was dazu führte, schwermetallfreie Korrosionsschutzpigmente als Ersatz für Zinkverbindungen zu suchen.

Beispielsweise aus der EP-A-0 718 377 sind Korrosionsschutzpigmente bekannt, die aus einer Mischung von β-Tricalciumphosphat mit tertiärem Magnesiumphosphat oder mit Dicalciumphosphatdihydrat bestehen. Andere schwermetallfreie Phosphatpigmente sind in der DE-C-4 021 086 beschrieben und bestehen aus Magnesium-Aluminiumorthophosphat oder Calcium-Aluminiumorthophosphat in Form eines Mischkristalles aus Aluminiumphosphat und Erdalkaliphosphat.

Die JP-95 237 301A (Derwent Abstract) beschreibt Korrosionsschutzpigmente aus einer Mischung von Aluminiumtripolyphosphat mit Erdalkalioxid oder -carbonat, die JP-93 111 772A (Derwent Abstract) solche auf Basis von Calcium-hydroxylapatit.

Bei zahlreichen als Ersatz für Zinkverbindungen vorgeschlagenen schwermetallfreien Phosphatpigmenten wurde zwar eine gute Korrosionsinhibierung festgestellt, gleichzeitig aber eine unerwünschte Neigung zur Blasenbildung und zu Haftungsverlusten der Beschichtungen, insbesondere bei feuchtklimatischen Kurzzeitprüfungen, die üblicherweise als Korrosionsschutzprüfungen in der Lackindustrie angewendet werden.

Die der Erfindung zugrundeliegende Aufgabe bestand somit darin, neue schwermetallfreie Korrosionsschutzpigmente zu bekommen, die möglichst gute Korrosionsinhibierungseigenschaften haben und gleichzeitig keine oder möglichst geringe Blasenbildung und Haftungsverluste der sie enthaltenden Beschichtung ergeben.

Erfindungsgemäß wird diese Aufgabe mit einem Korrosionsschutzpigment gelöst, das eine Mischung und/oder ein Umsetzungsprodukt aus Hydroxylapatit mit Trimagnesiumphosphat ist.

Im Regelfall wird man einem Beschichtungsstoff eines der erfindungsgemäßen Korrosionsschutzpigmente zusetzen, es sind aber auch Fälle denkbar, in denen es günstig ist, von zwei oder drei der Korrosionsschutzpigmente etwas zuzusetzen.

Die erfindungsgemäßen Korrosionsschutzpigmente lösen die der Erfindung zugrundeliegende Aufgabe einer Kombination möglichst hoher Korrosionsinhibierung verbunden mit möglichst geringer Blasenbildung und möglichst geringem Haftungsverlust der sie enthaltenden Beschichtung. Die Korrosionsinhibierung bei phosphathaltigen Beschichtungen ist von dem wasserlöslichen Phosphatgehalt des Pigmentes abhängig. Die Phosphationen sind für die Ausbildung von Schutzschichten an der Grenzfläche von Metall zu Beschichtung bei Belastung durch Wasser und Sauerstoff unerläßlich. Die sich bildenden Schutzschichten bestehen aus Eisen-II-phosphat/Eisen-III-oxid. Die Gegenwart von Sauerstoff verhindert, daß das Eisen als Hydroxid in Lösung geht. Das Phosphat bewirkt den Verbleib des Eisenions in der defekten Stelle unter Ausbildung einer Eisen-III-oxid-/Eisen-II-phosphat-Passivierungsschicht.

Maximale Phosphatlöslichkeit und damit Inhibierungseigenschaft erhöht jedoch gleichzeitig die Hydrophilie der Beschichtung und damit die Neigung zu Blasenbildung und Haftungsverlust. Man muß also einen Kompromiß suchen, bei dem eine relativ hohe Phosphatlöslichkeit und damit Korrosionsinhibierung mit möglichst geringer Blasenbildung und möglichst geringem Haftungsverlust der Beschichtung verbunden ist. Dies erreicht man mit den erfindungsgemäßen Korrosionsschutzpigmenten, insbesondere mit solchen, deren wasserlöslicher Phosphatgehalt höchsten 1000 mg/l, vorzugsweise höchstens 900 mg/l, besonders bevorzugt höchstens 800 mg/l beträgt.

Dabei wird der wasserlösliche Phosphatgehalt der Phosphatpigmente in der Weise bestimmt, daß 20 g einer Probe des Phosphatpigmentes in 180 ml deionisiertem Wasser 5 min gekocht und nach dem Abkühlen auf Raumtemperatur auf 200 ml aufgefüllt werden. Die Suspension wird durch einen Faltenfilter (602 H 1/2) filtriert. Der Orthophosphatgehalt des klaren Filtrates wird kolorimetrisch bestimmt.

Der Hydroxylapatit mit der Formel Ca₅(PO₄)₃OH kann erfindungsgemäß im Gemisch und/oder als Umsetzungsprodukt aus Hydroxylapatit und Trimagnesiumphosphat verwendet werden. Wenn in diesem Zusammenhang von Umsetzungsprodukten aus Hydroxylapatit mit Trimagnesiumphosphat die Rede ist, sind damit alle Produkte gemeint, die bei gemeinsamer Fällung durch Umsetzung von Calciumhydroxid, Magnesiumhydroxid und Orthophosphorsäure entstehen können. Solche Produkte können Mischkristalle, definierte Verbindungen und/oder reine Mischungen sein. Die Korrosionsschutzpigmente nach der Erfindung werden durch Umsetzung in wäßriger Suspension unter Rühren bei erhöhter Temperatur gewonnen.

Zweckmäßig enthalten die erfindungsgemäßen Korrosionsschutzpigmente analytisch bis zu 10 Gew.%, vorzugsweise bis zu 9 Gew.%, besonders bis zu 7 Gew.% Magnesiumoxid, berechnet auf die glühverlustfreie Zusammensetzung. Die Prozentangaben sind hier durchwegs in der üblichen Oxidform gemacht, obwohl die angegebenen Metalle nicht in Oxidform in dem Korrosionsschutzpigment vorliegen müssen, sondern auch anderweitig gebunden sein können. Alle Gewichtsprozentangaben beziehen sich auf die glühverlustfreien Korrosionsschutzpigmente. Der Glühverlust liegt bei diesen Pigmenten gewöhnlich im Bereich von 3 bis 12 Gew.%.

Die erfindungsgemäßen Korrosionsschutzpigmente werden vorzugsweise für den Korrosionsschutz von Metallteilen oder Metallegierungsteilen eingesetzt. Die Teilchengröße der Korrosionsschutzpigmente liegt zweckmäßig unter 5 µm. Ein Beispiel einer praxisüblichen Rezeptur für eine Grundierbeschichtung ist folgendes:

| **Rezeptur** | |
|---|---|
| | **Gewichtsteile in %** |
| Kurzöliges Alkyldharz, 60 %ig (34 % spezielle Fettsäuren) | 40,7 |
| Aromatischer Kohlenwasserstoff | 13,55 |
| Mod. Montmorillonit als Antiabsetzmittel | 0,35 |
| Glykolether | 1,1 |
| Pigment | 8,9 |
| Magnesiumsilikat | 11,8 |
| Natürliches Bariumsulfat | 15,5 |
| Titandioxid Rutil | 7,5 |
| Co-Zr-octoat als Trockner | 0,3 |
| Antioxidantien | 0,3 |
| | 100 |
| | |
| Festkörpergehalt % | 68,5 |
| Pigmentvolumenkonzentration (PVK) in % | 36,0 |
| Kritische Pigmentvolumenkonzentration (KPVK) in % | 51,4 |

Bei den nachfolgenden Vergleichsversuchen wurde die Inhibierungswirkung im Kurztest nach Ruf ("farbe + lack", 101 [1995], Seiten 922 bis 927) einerseits durch Anfeuchten mit destilliertem Wasser und andererseits durch Anfeuchten mit 0,3 %iger NaCl-Lösung bestimmt. In diesem Kurztest nach Ruf werden aus gleichen Volumenanteilen des zu bestimmenden Pigmentes und destilliertem Wasser wäßrige Pasten hergestellt und diese mit Hilfe einer gelochten Schablone in einer Dicke von 100 µm auf ein Filterpapier in einer Größe von 3 x 34 cm aufgetragen. In der Folie sind Löcher von ca. 60 mm Größe systematisch angeordnet. Das mit Pigment versehene Filterpapier wird direkt auf den zu untersuchenden Untergrund gegeben und zur Einstellung des Feuchtklimas mit destilliertem Wasser bzw. 0,3 %iger NaCl-Lösung angefeuchtet. Die Dauer der Prüfung beträgt 10 bis 12 h. Der Testverlauf kann photographisch festgehalten werden. Die Endauswertung erfolgt direkt nach dem Entfernen des Filterpapiers und der Substanzreste. Bestimmt wird der Kernrost (K) als Prozente Rost, der sich unter dem Substanzkern gebiidet hat (K 0 bis K 100) und der Flächenrost (F) als Prozente des Flächenrostes (F 0 bis F 100). Bei einer gut inhibierenden Substanz darf möglichst kein Kernrost auftreten.

Weiterhin wurde der wasserlösliche Phosphatgehalt und die Blasenbildung in Kurzzeitbewitterung nach DIN 53 209 bestimmt. Dabei wurden die in der Lackindustrie üblichen klassischen Korrosionsprüfungen in Form des Salzsprühtestes nach DIN 50 021 und des Schwitzwassertests nach DIN 50 017 vorgenommen. Hierbei wurde auf industriell entfetteten Stahlblechen St 1405 eine Alkydharzgrundierung entsprechend der obigen Rezeptur jeweils mit einem Gehalt von 25 Vor.% Korrosionsschutzpigment und mit einer Trockenfilmdicke von 40 bis 50 µm aufgebracht. Die Ergebnisse finden sich in der nachfolgenden Tabelle. Diese enthält außer erfindungsgemäßen Korrionsschutzpigmenten auch solche nach dem Stand der Technik und außerhalb des Erfindungsgedankens.

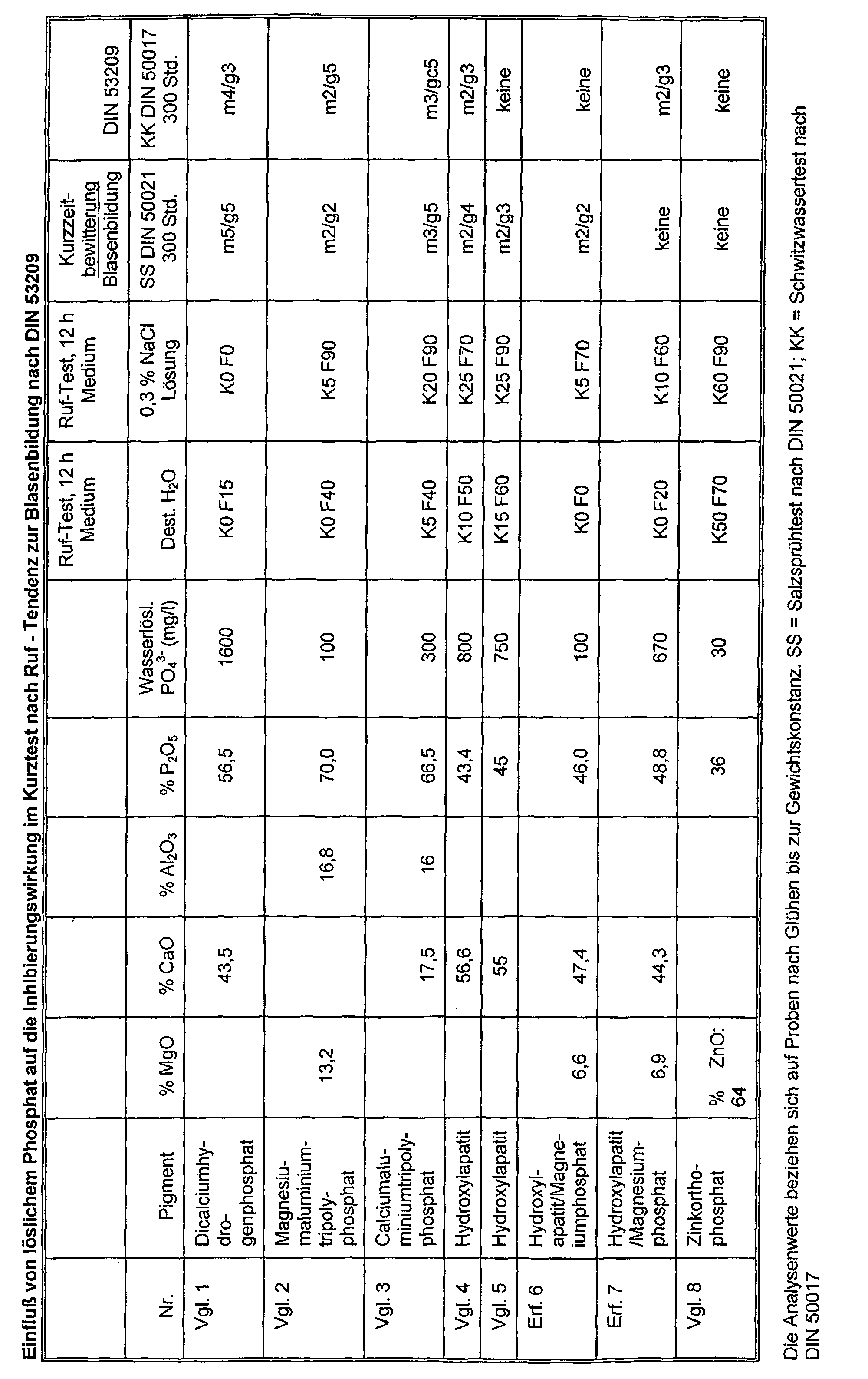

Die Werte in der obigen Tabelle zeigen, daß das als Korrosionsschutzpigment bekannte Dicalciumhydrogenphosphat gute Inhibierungswirkung hat, aber zu starker Blasenbildung neigt.

Zinkphosphat zeigt keine Blasenbildung, hat aber in der Anfangsphase der Bewitterung relativ schlechte Inhibierungswirkung und soll wegen seines Schwermetallgehaltes substituiert werden.

Das Umsetzungsprodukt von Hydroxylapatit mit Trimagnesiumphosphat nach der Erfindung besitzt eine gute Kombination von Inhibierungswirkung und Widerstandsfähigkeit gegen Blasenbildung.

### Beispiel

### Herstellung eines Korrosionsschutzpigmentes nach der Erfindung aus Calciumhydroxid, Magnesiumhydroxid und Phosphorsäure

2,6 mol Calciumhydroxid und 0,5 mol Magnesiumhydroxid sowie 2 mol 75 %ige Orthophosphorsäure wurden in wäßriger Suspension mit einem Feststoffgehalt von 30 % 1,5 h bei 60 °C gerührt. Das entstandene Produkt wurde abfiltriert, getrocknet und vermahlen.

## Patentansprüche

1. Korrosionsschutzpigment für den Oberflächenschutz von Metallen oder Metallegierungen bestehend aus einer Mischung und/oder einem Umsetzungsprodukt einer Magnesiumphosphatverbindung, **dadurch gekennzeichnet, daß** es eine Mischung und/oder ein Umsetzungsprodukt aus Hydroxylapatit mit Trimagnesiumphosphat ist.

2. Korrosionsschutzpigment nach Anspruch 1, **dadurch gekennzeichnet, daß** es berechnet auf glühverlustfreier Basis einen wasserlöslichen Phosphatgehalt von höchstens 1000 mg/l hat.

3. Korrosionsschutzpigment nach Anspruch 2, **dadurch gekennzeichnet, daß** es berechnet auf glühverlustfreier Basis einen wasserlöslichen Phosphatgehalt von höchstens 900 mg/l hat.

4. Korrosionsschutzpigment nach Anspruch 2 oder 3, **dadurch gekennzeichnet, daß** es berechnet auf glühverlustfreier Basis einen wasserlöslichen Phosphatgehalt von höchstens 800 mg/l hat.

5. Korrosionsschutzpigment nach einem der Ansprüche 1 bis 4, **dadurch gekennzeichnet, daß** es berechnet auf glühverlustfreier Basis bis zu 10 Gew.-% Magnesiumoxid enthält.

6. Korrosionsschutzpigment nach einem der Ansprüche 1 bis 5, **dadurch gekennzeichnet, daß** es berechnet auf glühverlustfreier Basis bis zu 9 Gew.% Magnesiumoxid enthält.

7. Korrosionsschutzpigment nach einem der Ansprüche 1 bis 6, **dadurch gekennzeichnet, daß** es berechnet auf glühverlustfreier Basis bis zu 7 Gew.% Magnesiumoxid enthält.

8. Verwendung von Korrosionsschutzpigmenten nach einem der Ansprüche 1 bis 7 für den Korrosionsschutz von Metallteilen oder Metallegierungsteilen.

## Claims

1. An anti-corrosion pigment for the surface protection of metals or metal alloys, consisting of a mixture and/or a reaction product of a magnesium phosphate compound, **characterized in that** it is a mixture and/or a reaction product of hydroxyapatite with trimagnesium phosphate.

2. An anti-corrosion pigment as set forth in claim 1, **characterized in that** calculated on a firing loss-free basis it has a water-soluble phosphate content of at most 1000 mg/l.

3. An anti-corrosion pigment as set forth in claim 2, **characterized in that** calculated on a firing loss-free basis it has a water-soluble phosphate content of at most 900 mg/l.

4. An anti-corrosion pigment as set forth in claim 2 or 3, **characterized in that** calculated on a firing loss-free basis it has a water-soluble phosphate content of at most 800 mg/l.

5. An anti-corrosion pigment as set forth in one of claims 1 through 4, **characterized in that** calculated on a firing loss-free basis it contains up to 10% by weight of magnesium oxide.

6. An anti-corrosion pigment as set forth in one of claims 1 through 5, **characterized in that** calculated on a firing loss-free basis it contains up to 9% by weight of magnesium oxide.

7. An anti-corrosion pigment as set forth in one of claims 1 to 6, **characterized in that** calculated on a firing loss-free basis it contains up to 7 % by weight of magnesium oxide.

8. Use of anti-corrosion pigments as set forth in one of claims 1 through 7 for corrosion protection for metal parts or metal alloy parts.

## Revendications

1. Pigment anticorrosion destiné à la protection superficielle des métaux ou alliages métalliques, composé d'un mélange et/ou d'un produit de conversion d'un composé de phosphate de magnésium, **caractérisé en ce que** c'est un mélange et/ou produit de conversion de l'hydroxylapatite avec du triphosphate de magnésium.

2. Pigment anticorrosion selon la revendication 1, **caractérisé en ce qu'**il possède, calculée sur une base sans perte à la calcination, une teneur en phosphate hydrosoluble d'au plus 1 000 mg/l.

3. Pigment anticorrosion selon la revendication 2, **caractérisé en ce qu'**il possède, calculée sur une base sans perte à la calcination, une teneur en phosphate hydrosoluble d'au plus 900 mg/l.

4. Pigment anticorrosion selon la revendication 2 ou 3, **caractérisé en ce qu'**il possède, calculée sur une base sans perte à la calcination, une teneur en phosphate hydrosoluble d'au plus 800 mg/l.

5. Pigment anticorrosion selon l'une des revendications 1 à 4, **caractérisé en ce qu'**il contient, calculé sur une base sans perte à la calcination, jusqu'à 10 % en poids d'oxyde de magnésium.

6. Pigment anticorrosion selon l'une des revendications 1 à 5, **caractérisé en ce qu'**il contient, calculé sur une base sans perte à la calcination, jusqu'à 9 % en poids d'oxyde de magnésium.

7. Pigment anticorrosion selon l'une des revendications 1 à 6, **caractérisé en ce qu'**il contient, calculé sur une base sans perte à la calcination, jusqu'à 7 % en poids d'oxyde de magnésium.

8. Utilisation de pigments anticorrosion selon l'une des revendications 1 à 7 pour la protection contre la corrosion de pièces métalliques ou de pièces d'alliages métalliques.
